# EUROPÄISCHE PATENTSCHRIFT

(11) **EP 2 140 920 B1**
(45) Veröffentlichungstag und Bekanntmachung des Hinweises auf die Patenterteilung: **25.04.2012**
(21) Anmeldenummer: 09008331.2
(22) Anmeldetag: 25.06.2009
(51) Int. Cl.: B01D 19/00

(54) **Drallelement, Einlaufventil, Vorrichtung und Verfahren zum Entgasen von Flüssigkeiten**
Twisting element, inlet valve, device and method of removing gas from fluids
Elément de torsion, soupape d'admission, dispositif et procédé de dégazage de liquides

(30) Priorität: 04.07.2008 DE 102008031446
(43) Veröffentlichungstag der Anmeldung: 06.01.2010
(73) Patentinhaber: Krones AG, 93073 Neutraubling (DE)
(72) Erfinder: Meinzinger, Rupert, 94356 Kirchroth (DE); Feilner, Roland, 93053 Regensburg (DE)
(74) Vertreter: Kuhnen & Wacker

(56) Entgegenhaltungen:
- EP-A- 1 443 026
- EP-A- 2 123 339
- DE-A1-102005 014 076
- FR-A- 962 402
- GB-A- 1 247 126
- GB-A- 2 126 927
- US-A- 4 199 332
- US-A- 6 036 749

## Beschreibung

Die Erfindung betrifft die Verwendung eines Drallelements für ein Einlaufventil einer Entgasungsvorrichtung zum Einbringen eines flüssigen Lebensmittels oder entsprechender Vorstufen desselben in die Entgasungsvorrichtung nach Anspruch 1, eines Einlaufventils zum Einbringen eines flüssigen Lebensmittels oder entsprechender Vorstufen desselben in die Entgasungsvorrichtung nach Anspruch 3, einer Vorrichtung zum Entgasen von flüssigen Lebensmitteln oder entsprechender Vorstufen derselben nach Anspruch 12 und Verfahren zum Entgasen von Flüssigkeiten nach Anspruch 13.

Das Entgasen von Flüssigkeiten, wie beispielsweise von flüssigen Lebensmitteln, insbesondere Getränken, erfolgt herkömmlich in einer Entgasungsvorrichtung. Dabei wird die Flüssigkeit einem verminderten Absolutdruck oft in Kombination mit einer gegenüber der Raumtemperatur erhöhten Temperatur ausgesetzt. Um eine möglichst weitgehende Entgasung der Flüssigkeit zu erreichen, ist es erforderlich, alle Volumenelemente der Flüssigkeit den vorstehend genannten Bedingungen auszusetzen. Dazu wird die Flüssigkeit entweder durch Versprühen oder in Gestalt eines dünnen Films in die Entgasungsvorrichtung eingebracht.

In der Druckschrift JP 2003-164706 wird eine Entgasungsvorrichtung vorgeschlagen, bei der die zu entgasende Flüssigkeit senkrecht von oben und coaxial zur Mittenachse in einen tankförmigen Entgasungsbehälter eingebracht wird. Das Innere des Entgasungsbehälters weist einen verminderten Absolutdruck auf. Im Detail erfolgt die Zuführung durch ein Einlaufventil, das im oberen Bereich des Entgasungsbehälters angeordnet ist. Dabei tritt die Flüssigkeit durch einen fest voreingestellten Ringspalt aus dem Einlaufventil in den Entgasungsbehälter ein. Der Ringspalt wird bei geöffnetem Einlaufventil von einem Ventilsitz und einem Ventilkegel begrenzt. Der Ventilsitz ist der untere Endabschnitt des Einlaufventilgehäuses. Der Ventilkegel ist durch eine Steuereinrichtung derart antreibbar, dass zwei Ventilzustände, nämlich ein vollständig geöffneter Ventilzustand und ein vollständig geschlossener Ventilzustand, verwirklicht werden können.

Beim Durchtreten der Flüssigkeit durch den Ringspalt bei geöffnetem Einlaufventil strömt die Flüssigkeit über den Ventilkegel in den Entgasungsbehälter ein. Dabei ist der Ventilkegel als Schirm ausgebildet, der einen gegenüber dem Einlaufventil vergrößerten Durchmesser aufweist und von der Mittelachse des Einlaufventils, welche coaxial zur Mittelachse des Entgasungsbehälters angeordnet ist, radial nach außen hin abfällt. Die ausströmende Flüssigkeit bildet idealerweise einen dünnen Film auf dem Ventilkegel aus, wobei sich der Film an der den Kegel abschließenden Kante ablöst. Der Flüssigkeitsfilm trifft nach freiem Flug auf die Innenwand des Entgasungsbehälters auf und läuft vertikal nach unten ab.

Aus der Schrift DE 297 22 673 U1 ist eine Vorrichtung zum Entgasen von empfindlichen Lebensmitteln mit viskoser Konsistenz bekannt, bei der ein rotierender, kegelförmiger Teller zur Erzeugung eines dünnen Flüssigkeitsfilms vorgeschlagen wird. Hierbei entspricht der Durchmesser des rotierenden Tellers annähernd dem Innendurchmesser des Entgasungsbehälters, wobei zwischen Tellerrand und Behälterwand ein schmaler, ringförmiger Spalt ausgebildet wird. Während des Entgasungsvorgangs tritt die viskose Flüssigkeit durch den Ringspalt aus und verteilt sich dann aufgrund der durch die Rotationsbewegung einwirkenden Scherkräfte auf dem Teller. Die durch die Scherkräfte bedingte Schleuderwirkung des rotierenden Kegeltellers dünnt die Flüssigkeitsschicht unter Ausbildung eines fließenden Films aus. Der Flüssigkeitsfilm liegt über die gesamte Wegstrecke vom Einlaufventil bis zum Tellerrand in der Nähe der Behälterwand auf der oberen Umfangsfläche des Tellers auf.

Die Verwendung eines herkömmlichen Einlaufventils, bei dem ein Flüssigkeitsfilm durch radiale Umlenkung des Flüssigkeitsstroms an einem Ventilkegel ausgebildet wird, ist insofern nachteilig, als es bei der Entgasung verschiedener Flüssigkeiten und/oder unter sich ändernden physikalischen Randbedingungen zu einer nicht optimalen Film- bzw. Schirmbildung hinsichtlich des Austrags von Gasen aus der Flüssigkeit kommen kann. Werden verschiedene Flüssigkeiten oder Flüssigkeiten variabler Zusammensetzung mit derselben Einlaufvorrichtung in die Entgasungsvorrichtung eingebracht, so kann es in Folge der unterschiedlichen Strömungs- bzw. Fließverhalten der Flüssigkeiten zur Ausbildung von Flüssigkeitsfilmen unterschiedlicher Gestalt kommen, die von der für die Entgasung optimalen Filmgestalt zwangsweise abweichen. Neben den physikalischen Randbedingungen bestimmt im Wesentlichen die Zusammensetzung einer Flüssigkeit deren rheologische Eigenschaften und somit deren Strömungsverhalten. Die Zusammensetzung wird wiederum vom Lösungsmittel, im Anwendungsfall insbesondere Wasser oder Öl, und von Menge und Art der gelösten Inhaltsstoffe bestimmt. Im Falle von Suspensionen wirkt sich zudem der Feststoffgehalt auf die Strömungseigenschaften aus.

Ein weiterer Nachteil eines herkömmlichen Einlaufventils ist, dass die Ausbildung eines Flüssigkeitsfilms optimaler Dicke einen konstanten Volumenstrom der in die Entgasungsvorrichtung einströmenden Flüssigkeit voraussetzt. Bedingt durch äußere Einwirkungen, insbesondere durch Einflüsse von vor- oder nachgeschalteten Aggregaten in einem kontinuierlichen Herstellungs- bzw. Verarbeitungsprozess, kann es jedoch zu Schwankungen im Flüssigkeitsvolumenstrom bei der Entgasung kommen. Ein vom ursprünglich vorgesehenen Sollwert abweichender Volumenstrom führt jedoch zur Ausbildung eines im Hinblick auf die Entgasung nicht optimalen Flüssigkeitsfilms und mithin zu einem unzureichenden Entgasungsergebnis.

Neben den unzureichenden Entgasungsergebnissen können Abweichungen vom optimalen Flüssigkeitsfilm während des Entgasungsvorgangs auch zu verstärktem Schäumen der Flüssigkeit führen. Dies kann insbesondere dann auftreten, wenn der Flüssigkeitsfilm in einem ungünstigen, hinreichend steilen Winkel auf die Innenwand des Entgasungsbehälters auftritt. Erreicht die Schaumbildung eine derartige Intensität im Entgasungsbehälter, dass der Schaum die - oftmals coaxial im Einlaufventil mitintegrierte - Vakuumabsaugung erreicht, kann es zur Störung des Entgasungsvorgangs und gegebenenfalls des gesamten Herstellungsverfahrens kommen.

Der Einsatz eines Kegeltellers mit aufliegendem Flüssigkeitsfilm bringt zudem die aufwendige Montage eines weiteren Bauteils mit hohem Raumbedarf mit sich. Darüber hinaus erfordert der vorgeschlagene Kegelteller eine aufwändige Aufhängung und einen mechanisch komplizierten Antrieb für die Rotation des Kegeltellers. Ferner ist eine Entgasungsvorrichtung mit derartigen Einbauten schwer zu reinigen, was insbesondere für die Entgasung von flüssigen Lebensmitteln nachteilig ist.

Darüber hinaus war es bisher nicht möglich, den Teil einer Innenfläche im oberen Teil des Entgasungsbehälters, der oberhalb der Auftrefffläche des Flüssigkeitsfilms lag, als Entgasungsfläche zu nutzen. Dadurch war die nutzbare Entgasungsfläche beschränkt, was zu einem unzureichenden Gasaustrag und zu größeren Behältern führte.

Dokument GB 1 247 126 betrifft eine wirbelerzeugende Leitschaufel-Vorrichtung zur Verwendung in einer Zentrifugal-Trennvorrichtung. Diese wirbelerzeugende Leitschaufel-Vorrichtung kann in einem Wirbelrohr einer Zentrifugal-Trennvorrichtung montiert werden und weist eine Tragstruktur mit vier kurvenförmigen Strömungsleitelementen auf. Diese sind mit der Tragstruktur einstückig ausgebildet, auf der Oberfläche der Tragstruktur beabstandet voneinander angeordnet und erstrecken sich von der Tragstruktur nach außen. Dabei definieren die Tragstruktur und die vier Strömungsleitelemente vier Auskehlungen, die sich entlang der Tragstruktur erstrecken und von im Wesentlichen gleicher Querschnittsfläche sind. Dabei erstreckt sich jede der Auskehlungen über einen Bogen von etwa 70 bis 90 ° gegenüber der Längsachse der Tragstruktur. Ferner weist die Tragstruktur eine sich in Längsrichtung erstreckende Bohrung auf, die am stromabwärtigen Ende der Tragstruktur einen Auslass aufweist.

Damit offenbart Dokument GB 1 247 126 ein Drallelement, mit wenigstens einem Strömungsleitelement, wobei das Drallelement eine Tragstruktur aufweist. Dabei ist das wenigstens ein Strömungsleitelement auf einer äußeren Umfangsfläche der Tragstruktur angeordnet. Die Steigung des Strömungsleitelements nimmt über den strömungsberührten Abschnitt stromabwärts ab.

Der Erfindung liegt daher die Aufgabe zugrunde, zumindest die Verwendung eines Drallelements für ein Einlaufventil einer Entgasungsvorrichtung zum Einbringen eines flüssigen Lebensmittels oder entsprechender Vorstufen desselben in die Entgasungsvorrichtung, eines Einlaufventils zum Einbringen eines flüssigen Lebensmittels oder entsprechender Vorstufen desselben in die Entgasungsvorrichtung, einer Vorrichtung zum Entgasen von flüssigen Lebensmitteln oder entsprechender Vorstufen derselben oder ein Verfahren zum Entgasen von Flüssigkeiten bereitzustellen, so dass ein produktschonendes, schaumarmes Einbringen einer Flüssigkeit in eine Entgasungsvorrichtung unter Ausbildung eines optimalen Flüssigkeitsfilms auch bei schwankenden Flüssigkeitszusammensetzungen und/oder Volumenströmen erzielt wird.

Diese Aufgabe wird durch die Verwendung des Drallelements für ein Einlaufventil einer Entgasungsvorrichtung zum Einbringen eines flüssigen Lebensmittels oder entsprechender Vorstufen desselben in die Entgasungsvorrichtung mit den Merkmalen des Anspruchs 1, die Verwendung des Einlaufventils zum Einbringen eines flüssigen Lebensmittels oder entsprechender Vorstufen desselben in die Entgasungsvorrichtung mit den Merkmalen des Anspruchs 3 und durch die Verwendung einer Vorrichtung zum Entgasen von flüssigen Lebensmitteln mit den Merkmalen des Anspruchs 12 gelöst.

Ferner wird die Aufgabe in verfahrenstechnischer Hinsicht durch das Verfahren zum Entgasen von Flüssigkeiten mit den Merkmalen des Anspruchs 13 gelöst.

Erfindungsgemäß wird erstmals die Verwendung eines Drallelements für ein Einlaufventil zum Einbringen eines flüssigen Lebensmittels oder entsprechender Vorstufen desselben in die Entgasungsvorrichtung mit wenigstens einem Strömungsleitelement vorgeschlagen. Dabei ist dem durch das Einlaufventil strömenden flüssigen Lebensmittel oder entsprechender Vorstufen desselben ein Drehimpuls aufprägbar. Dabei weist das Drallelement eine Tragstruktur auf. Das wenigstens eine Strömungsleitelement ist auf einer äußeren Umfangsfläche und/oder auf einer Innenfläche der Tragstruktur angeordnet. Zudem nimmt die Steigung des Strömungsleitelements über den strömungsberührten Abschnitt stromabwärts ab.

Erfindungsgemäß wird damit erstmals der Einsatz eines Drallelements für ein Einlaufventil vorgeschlagen, wobei die einströmende Flüssigkeit durch Wechselwirkung mit dem wenigstens einen Strömungsleitelement einen Drehimpuls erhält, so dass sie einen Drall aufweist. Die Erzeugung des Drehimpulses führt zu einer tangentialen Beschleunigung der strömenden Flüssigkeit, die eine zusätzliche Bewegungskomponente in im Wesentlichen radialer Richtung verursacht. Der Drehimpuls bewirkt, dass sich die Flüssigkeit vom Drallelement unter Ausbildung eines Flüssigkeitsfilms bzw. - schirms ablöst.

Vorteilhaft ist hierbei, dass der Flüssigkeitsfilm für die Entgasung optimale Eigenschaften, insbesondere eine optimale Filmdicke aufweist. Durch die optimalen Entgasungseigenschaften des erzeugten Flüssigkeitsfilms kann ein hinreichender Gasaustrag aus der Flüssigkeit sichergestellt werden.

Die tangentiale Beschleunigung des Flüssigkeitsfilms bewirkt ferner erstmals ein unmittelbares Anlegen des Flüssigkeitsfilms an eine Innenfläche des Einlaufventils oder des Entgasungsbehälters. Damit kann die Innenfläche des Entgasungsbehälters erstmals praktisch vollständig als Entgasungsfläche genutzt werden.

Aufgrund des unmittelbaren Anlegens des Flüssigkeitsfilms an die Innenfläche und des engen Anliegens des Flüssigkeitsfilms beim Ablauf an der Innenfläche kann das Schäumen der zu entgasenden Flüssigkeit weiter vermindert werden.

Das Aufprägen eines Drehimpulses auf eine durch das Drallelement strömende Flüssigkeit macht es darüber hinaus erstmals möglich, einen Flüssigkeitsfilm optimaler Dicke selbst bei schwankendem Volumenstrom zu erzeugen. So wird beispielsweise bei Zunahme des Volumenstroms die Strömungsgeschwindigkeit im Einlaufventil erhöht, wodurch aufgrund der Wechselwirkung der Flüssigkeit mit dem wenigstens einen Strömungsleitelement auch die Winkelgeschwindigkeit der Flüssigkeit zunimmt. Hierdurch wird wiederum die radiale Geschwindigkeitskomponente vergrößert, so dass trotz des höheren Volumenstroms ein Flüssigkeitsfilm mit gleichbleibender und optimaler Dicke ausgebildet wird. Erfindungsgemäß ist somit eine aktive Steuerung des Filmbildungsprozesses nicht erforderlich.

Ferner wirken durch das erfindungsgemäße Drallelement nur geringfügige Scherkräfte auf die strömende Flüssigkeit, wodurch die zu entgasende Flüssigkeit geschont wird und deren Qualität erhalten bleibt.

Zudem lassen sich herkömmliche Einlaufventile mit dem erfindungsgemäßen Drallelement nachrüsten, so dass die Vorteile der Erfindung durch einen minimalen Kosten- und Montageaufwand erzielt werden können.

Das erfindungsgemäße Drallelement weist eine Tragstruktur auf. Die Tragstruktur stützt das Strömungsleitelement und legt seine Orientierung im Raum fest.

Insbesondere ist es von Vorteil, wenn die Tragstruktur im Wesentlichen zylindrisch oder rohrfömig ausgebildet ist. Eine Tragstruktur mit im Wesentlichen runden Querschnitt verursacht einen minimalen Strömungswiderstand beim Umströmen der Tragstruktur.

Ferner ist beim erfindungsgemäßen Drallelement wenigstens ein Strömungsleitelement auf einer äußeren Umfangsfläche und/oder auf einer Innenfläche der Tragstruktur angeordnet. Diese Anordnung ermöglicht eine maximale Gestaltungsfreiheit des Drallelements unter Berücksichtigung einer strömungsoptimierten Gestaltung.

Besonders vorteilhaft ist, wenn das Strömungsleitelement wendel- oder spiralförmig ausgestaltet ist. Dadurch kann in konstruktiv einfacher Weise eine produktschonende Beschleunigung in tangentialer Richtung zur Aufprägung eines Drehimpulses bzw. Erzeugung eines Dralls erreicht werden.

Ferner besteht die Möglichkeit, dass die Steigung des Strömungsleitelements über einen strömungsberührten Abschnitt nicht konstant ist. Dies erlaubt vorteilhaft die Voreinstellung von sich ändernden Kräften, die beim Durchströmen der Flüssigkeit durch das Drallelement einwirken. Hierdurch kann eine nicht konstante Beschleunigung der Flüssigkeit besonders einfach erreicht werden.

Insbesondere nimmt die Steigung des Strömungsleitelements über den strömungsberührten Abschnitt stromabwärts ab. Hierdurch wird eine zunehmende Beschleunigung der Flüssigkeit beim Durchströmen des Drallelements erreicht, wobei die Scherkräfte stetig und nicht sprungartig zunehmen. Damit wird eine besonders produktschonende und schaumvermeidende Beschleunigung realisiert.

Durch die abnehmende Steigung des Strömungsleitelements wird die Strömungsquerschnittsfläche stromabwärts entlang des Strömungsleitelements verringert, wodurch eine Druckerhöhung auf die durchströmende Flüssigkeit vorteilhaft erzielt wird.

Dies hat zudem das Auftreten eines Staupunkts zur Folge, der durch seinen vergrößerten Druckverlust dafür sorgt, dass das Ventil aufwärts nicht leerläuft.

Die Tragstruktur kann an einem stromabwärtsseitigen Endabschnitt einen Durchmesser aufweisen, der gegenüber dem Durchmesser an einem stromaufwärtsseitigen Endabschnitt vergrößert ist. Dieser vergrößerte Durchmesser erleichtert aufgrund einer zusätzlichen radialen Beschleunigungskomponente die Strömungsablösung am stromabwärtsseitigen Endabschnitt des Drallelements.

Die Tragstruktur kann an einem stromabwärtsseitigen Endabschnitt einen Durchmesser aufweisen, der gegenüber dem Durchmesser an einem stromaufwärtsseitigen Endabschnitt verkleinert ist. Hierdurch kann eine Strömungsabrisskante ausgebildet werden, die eine Strömungsablösung am stromabwärtsseitigen Endabschnitt des Drallelements vorteilhaft erleichtert.

Vorteilhafte Weiterbildungen des erfindungsgemäßen Drallelements sind Gegenstand des abhängigen Anspruchs 2.

So kann das wenigstens eine Strömungsleitelement einen Bereich von etwa 15 ° bis zu mehreren Umdrehungen um die Tragstruktur, insbesondere einen Bereich von etwa des halben Umfangs der Tragstruktur, umfassen.

Ferner wird erstmals die Verwendung eines Einlaufventils zum Einbringen eines flüssigen Lebensmittels oder entsprechender Vorstufen desselben in die Entgasungsvorrichtung vorgeschlagen, wobei das Einlaufventil ein Ventilgehäuse und das Drallelement aufweist. Dabei ist zwischen der Tragstruktur und einer Innenfläche des Ventilgehäuses wenigstens eine Öffnung ausgebildet, durch welche das flüssige Lebensmittel oder entsprechende Vorstufen desselben in einen Entgasungsbehälter der Entgasungsvorrichtung einbringbar ist. Ferner weist die wenigstens eine Öffnung im Wesentlichen die Gestalt eines Kreisringsegments auf.

Dabei kann das Kreisringsegment durch insbesondere durch die äußere Umfangsfläche der Tragstruktur, die Innenfläche des Ventilgehäuses und den strömungsabwärtsseitigen Endabschnitt eines Strömungsleitelements bzw. die strömungsabwärtsseitige Endabschnitte zweier Strömungsleitelemente begrenzt sein. Dabei lässt sich durch geeignete Voreinstellung der Größe der Öffnung ein Volumenstrombereich für die Ausbildung eines optimalen Flüssigkeitsfilms berücksichtigen. Darüber hinaus kann mittels der Öffnungsgröße die Strömungsgeschwindigkeit der aus dem Einlaufventil austretenden Flüssigkeit bei einem vorgegebenen Volumenstrom voreingestellt werden.

Die vorstehend diskutierten Vorteile der Verwendung des erfindungsgemäßen Drallelements gelten analog für die Verwendung des erfindungsgemäßen Einlaufventils.

Das Drallelement kann einen Durchmesser aufweisen, der zwischen dem 0,8-fachen bis 1,1-fachen, insbesondere zwischen dem 0,9-fachen bis 1,0-fachen des Innendurchmessers des Ventilgehäuses beträgt.

Vorteilhafte Weiterbildungen des erfindungsgemäßen Einlaufventils sind Gegenstand der abhängigen Ansprüche 4 bis 11.

So kann eine Spaltbreite zwischen dem Drallelement und dem Ventilgehäuse zwischen 0 und 40 mm, vorzugsweise zwischen 10 und 20 mm, insbesondere 15 mm, betragen.

Ferner kann das Einlaufventil eine, insbesondere an einem Flansch zum Anschließen an den Entgasungsbehälter der Entgasungsvorrichtung ausgebildete Innenfläche aufweisen, an der ein Flüssigkeitsfilm ausbildbar ist. Diese gezielte Ansteuerung der Innenfläche als Auftrefffläche für den Flüssigkeitsfilm erlaubt einen fließenden Übergang der Strömung vom Einlaufventil auf die Innenfläche des Entgasungsbehälters. Dies sorgt wiederum für ein turbulenz- und schaumarmes Einbringen der Flüssigkeit. Zudem kann ein optimaler Strömungsübergang vom Drallelement zur umgebenden Innenfläche bereits werksseitig vom Hersteller und unabhängig von der Gestalt des Entgasungsbehälters voreingestellt werden, noch bevor das Einlaufventil in der Entgasungsvorrichtung montiert ist.

In einer vorteilhaften Weiterbildung weist das Einlaufventil ferner ein Innenelement auf, wobei das Innenelement coaxial zum Drallelement angeordnet ist und mit dem Drallelement verbunden ist. Das Innenelement grenzt den Strömungsweg der Flüssigkeit an seiner äußeren Umfangsfläche von einem weiteren, beispielsweise einer Vakuumführung, ab. Somit wird die parallele Führung zweier Fluidströme innerhalb des Einlaufventils ermöglicht, wodurch eine kompakte Bauweise erzielt wird. Zudem erlaubt das Vorhandensein des Innenelements eine "Strömungsberuhigung" der einströmenden, zu entgasenden Flüssigkeit, bevor diese das Drallelement erreicht.

Die durch das Einlaufventil strömende Flüssigkeit kann an einer äußeren Umfangsfläche des Drallelements umlenkbar sein. Gegenüber einer Umlenkung an einer Innenfläche kann hierdurch der aufgeprägte Drehimpuls maximiert und die parallele Führung eines weiteren Fluids im Innern des Drallelements ermöglicht werden.

Zudem kann der durch das Drallelement erzeugte Flüssigkeitsfilm auf einen vorbestimmten Bereich der Innenfläche des Einlaufventils auftreffen. Hierdurch wird die für die Entgasung genutzte Oberfläche der Innenwand des Entgasungsbehälters vorteilhaft vergrößert. Dabei ist besonders vorteilhaft, wenn sich der Flüssigkeitsfilm vorzugsweise in nur geringem Abstand von der Öffnung an die Innenfläche des Einlaufventils anlegt.

In einer anderen Ausführungsform kann das Einlaufventil derart ausgebildet sein, dass der Flüssigkeitsfilm auf einen vorbestimmten Bereich der Innenfläche des Entgasungsbehälters auftrifft. Bei dieser Ausführungsform kann auf einen Flansch verzichtet werden, was die Konstruktion des Einlaufventils vereinfacht. Darüber hinaus kann der Flüssigkeitsübergang vom Einlaufventil zum Entgasungsbehälter derart gestaltet werden, dass eine Schaumbildung weitgehend verhindert oder zumindest vermindert wird.

Es kann es zudem von Vorteil sein, wenn bei einer wiederum anderen Ausführungsform die Größe der Öffnung in Abhängigkeit vom Volumenstrom der durch das Einlaufventil strömenden Flüssigkeit steuerbar ist. Dies kann beispielsweise durch Verschiebung des erfindungsgemäßen Drallelements entlang der Mittelachse des Einlaufventils in Strömungsrichtung erfolgen, wodurch die Öffnung vergrößert wird. Folglich kann selbst auf außergewöhnlich große Schwankungen bei der Flüssigkeitsbe- oder - verarbeitung, wie beispielsweise von anderen Aggregaten verursachte Volumenstromschwankungen, flexibel reagiert werden. Dabei kann die Steuerung von einer zusätzlichen Steuereinrichtung vorgenommen werden.

In diesem Zusammenhang kann es auch vorteilhaft sein, dass die Größe der Öffnung in Abhängigkeit von der Zusammensetzung der durch das Einlaufventil strömenden Flüssigkeit steuerbar ist. Hierdurch können beispielsweise außergewöhnlich große Inhomogenitäten eines Flüssigkeitsbatches oder eine Umstellung auf eine Flüssigkeit gänzlich anderer Zusammensetzung bei der Ausbildung des Flüssigkeitsfilms noch besser berücksichtigt werden.

Für die erfindungsgemäße Verwendung der Vorrichtung zum Entgasen flüssiger Lebensmittel oder entsprechender Vorstufen desselben, die das erfindungsgemäße

Drallelement und/oder das erfindungsgemäße Einlaufventil aufweist, gelten die vorstehend diskutierten Vorteile der Verwendung des Drallelements entsprechend.

In verfahrenstechnischer Hinsicht wird die Aufgabe durch das erfindungsgemäße Verfahren zum Entgasen von Flüssigkeiten gelöst. Dabei wird eine Flüssigkeit in eine Entgasungsvorrichtung mittels eines Einlaufventils eingebracht. Ferner weist das Einlaufventil ein Ventilgehäuse und ein Drallelement mit wenigstens einem Strömungsleitelement auf. Dabei wird durch das wenigstens eine Strömungsleitelement der eingebrachten Flüssigkeit ein Drehimpuls aufgeprägt. Dabei weist das Drallelement eine Tragstruktur auf. Das wenigstens eine Strömungsleitelement ist auf einer äußeren Umfangsfläche und/oder auf einer Innenfläche der Tragstruktur angeordnet, wobei die Steigung des Strömungsleitelements über den strömungsberührten Abschnitt stromabwärts abnimmt. Durch das wenigstens eine Strömungsleitelement wird der eingebrachten Flüssigkeit ein Drehimpuls aufgeprägt. Dabei ist der Vordruck der einströmenden Flüssigkeit in einem Bereich von 0,5 bis 2,5 bar, insbesondere etwa 1,5 bar.

Dadurch, dass dem ausgebildeten Flüssigkeitsfilm erfindungsgemäß erstmals ein Drehimpuls aufgeprägt wird, wird eine Ablösung des Films in im Wesentlichen horizontaler Richtung erreicht. Damit trifft der Film nach kürzestmöglicher Zeit und Strecke auf eine angrenzende, beispielsweise im Wesentlichen horizontal ausgerichtete Fläche auf. Aufgrund der Drehimpuls-bedingten tangentialen Beschleunigung der Flüssigkeit wird ein Ablösen und Herabtropfen der Flüssigkeit vorteilhaft vermieden, was andernfalls zu einer Verschlechterung der Entgasungswirkung und vermehrten Schaumbildung führen würde.

Für das erfindungsgemäße Verfahren nach Anspruch 13 und dessen vorteilhafte Weiterbildungen nach den Ansprüchen 14 bis 18 gelten die für die erfindungsgemäßen Vorrichtungen aufgeführten Merkmale und Vorteile in analoger Weise.

So kann die Flüssigkeit beim Durchströmen durch wenigstens eine Öffnung einen Flüssigkeitsfilm ausbilden, wobei die Öffnung zwischen der Tragstruktur und einer Innenfläche des Ventilgehäuses ausgebildet ist. Ein Flüssigkeitsfilm weist beispielsweise gegenüber einer Rohrströmung ein großes Oberfläche-zu-Volumen-Verhältnis auf, wodurch sich die in der Flüssigkeit enthaltenen Gase einfach austreiben lassen.

Weiter kann beim erfindungsgemäßen Verfahren der Flüssigkeitsfilm schirmartig ausgebildet sein. Infolge einer schirmartigen Ausbildung des Flüssigkeitsfilms wird ein besonders großes Oberfläche-zu-Volumen-Verhältnis erzeugt, wodurch die in der Flüssigkeit enthaltenen Gase noch besser ausgetrieben werden.

Darüber hinaus kann nach dem erfindungsgemäßen Verfahren der Flüssigkeitsfilm auf einen vorbestimmten Bereich der Innenfläche des Einlaufventils auftreffen. Der Flüssigkeitsfilm kann aber auch auf einen vorbestimmten Bereich der Innenfläche des Entgasungsbehälters auftreffen.

Schließlich kann die Temperatur der zu entgasenden Flüssigkeit in einem Bereich von 35 bis 75 °C, vorzugsweise etwa 3 °C unter deren Siedelinie, liegen.

Im übrigen sind alle Merkmale der erfindungsgemäßen Vorrichtungen und/oder der erfindungsgemäßen Verfahren jeweils miteinander kombinierbar.

Die Erfindung wird nachfolgend in Ausführungsbeispielen anhand der Figuren der Zeichnung näher erläutert. Es zeigt:
- Fig. 1: eine schematische perspektivische Ansicht einer ersten beispielhaften Aus- führungsform des erfindungsgemäßen Drallelements;
- Fig. 2: eine schematische perspektivische Ansicht einer zweiten beispielhaften Ausführungsform des erfindungsgemäßen Drallelements;
- Fig. 3: eine schematische perspektivische Ansicht einer dritten beispielhaften Aus- führungsform des erfindungsgemäßen Drallelements;
- Fig. 4: eine schematische Teilschnittansicht einer beispielhaften Ausführungsform des erfindungsgemäßen Einlaufventils mit dem Drallelement der Fig. 2;
- Fig. 5: eine schematische perspektivische Teilschnittansicht des erfindungsgemä- ßen Einlaufventils der Fig. 4; und
- Fig. 6: eine detaillierte Schnittansicht der beispielhaften Ausführungsform des er- findungsgemäßen Einlaufventils der Fig. 4.

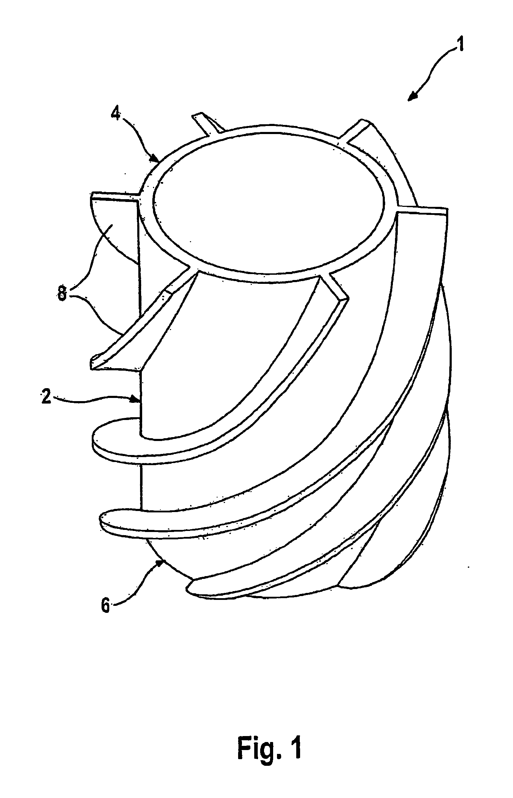

Gemäß der Darstellung in Fig. 1 weist ein Drallelement 1, eine Tragstruktur 2 mit einem stromaufwärtsseitigen Endabschnitt 4 und einem stromabwärtsseitigen Endabschnitt 6 auf. Die Tragstruktur 2 weist die Gestalt eines im Wesentlichen zylindrischen Hohlkörpers auf.

Das Drallelement 1 weist ferner sechs Strömungsleitelemente 8 auf, die auf der äußeren Umfangsfläche der Tragstruktur 2 angeordnet sind. Die Strömungsleitelemente 8 weisen eine streifenförmige Gestalt in wendelförmiger Anordnung auf, wobei die Länge eines Strömungselements 8 ein Mehrfaches seiner Breite sowie seiner Dicke beträgt. Die Strömungsleitelemente 8 sind an ihrer Längsseite durchgehend mit der zylindrischen Tragstruktur 2 verbunden. Sie stehen im Wesentlichen senkrecht von der äußeren Umfangsfläche der Tragstruktur 2 auf. Dabei verläuft die Führung der Strömungsleitelemente 8 in Strömungsrichtung der Flüssigkeit gesehen im Uhrzeigersinn. Die Strömungsleitelemente 8 beginnen am stromaufwärtsseitigen Endabschnitt 4 der Tragstruktur 2 und reichen bis zu dessen stromabwärtsseitigen Endabschnitt 6. In der Zentralperspektive gesehen umfassen die Strömungsleitelemente 8 zwischen dem stromaufwärtsseitigen Endabschnitt 4 und dem stromabwärtsseitigen Endabschnitt 6 einen Bereich von etwa des halben Umfangs der Tragstruktur 2 (ca. 180 °). Die Steigung der Strömungsleitelemente 8 ist in der Nähe des stromaufwärtsseitigen Endabschnitts 4 größer als in der Nähe des stromabwärtsseitigen Endabschnitts 6. D.h., in Strömungsrichtung gesehen, sind die Strömungsleitelemente 8 am stromaufwärtsseitigen Endabschnitt 4 steiler ansteigend, während sie am stromabwärtsseitigen Endabschnitt 6 flacher ansteigend ausgebildet sind.

Aufgrund dieser Führungsgestalt wird eine am Endabschnitt 4 einströmende Flüssigkeit zunächst nur leicht tangential beschleunigt. Strömt die Flüssigkeit weiter am Strömungsleitelement 8 des Drallelements 1 entlang, nimmt die tangentiale Beschleunigung aufgrund der abnehmenden Steigung der Strömungsleitelemente 8 zum Endabschnitt 6 derart zu, dass die Strömungslängsbewegung der Flüssigkeit entlang einer Zentralachse des Drallelements 1 zunehmend von einer Drehbewegung im Uhrzeigersinn um die Zentralachse überlagert wird. Die Drehbewegung kann jedoch auch entgegen dem Uhrzeigersinn um die Zentralachse gerichtet sein.

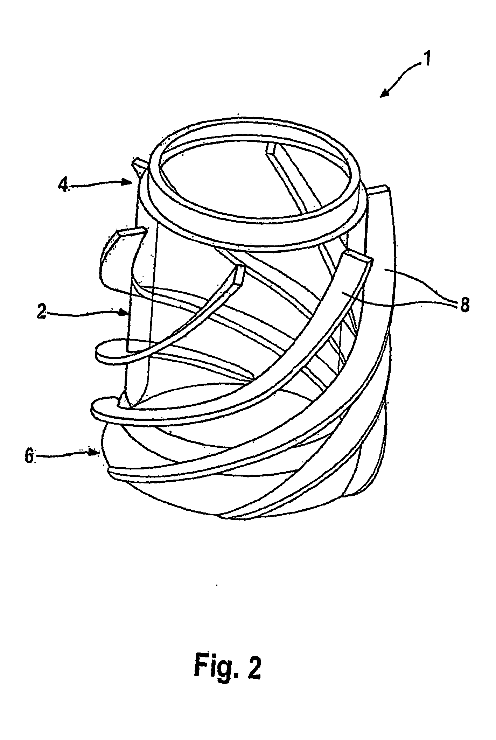

Eine weitere beispielhafte Ausführungsform des Drallelements 1 ist in Fig. 2 dargestellt. Hinsichtlich der Merkmale, die bei der ersten Ausführungsform gemäß Fig. 1 und der zweiten Ausführungsform gemäß Fig. 2 identisch sind, wird auf die Beschreibung der Fig. 1 verwiesen.

Die zweite Ausführungsform des Drallelements 1 gemäß Fig. 2 weist am stromabwärtsseitigen Endabschnitt 6 der Tragstruktur 2 einen Durchmesser auf, der gegenüber dem Durchmesser des stromaufwärtsseitigen Endabschnitts 4 der Tragstruktur 2 vergrößert ist.

Der vergrößerte Durchmesser des stromabwärtsseitigen Endabschnitts 6 der Tragstruktur 2 bewirkt eine zusätzliche Umlenkung des Flüssigkeitsstroms in im Wesentlichen radialer Richtung hinsichtlich der Zentralachse des Drallelements 1. Damit erhält die durchströmende Flüssigkeit eine zusätzliche Geschwindigkeitskomponente, die senkrecht zur Zentralachse des Drallelements 1 gerichtet ist. Die so erhaltene radiale Beschleunigung erleichtert vorteilhaft die Ablösung des Flüssigkeitsfilms am Endabschnitt 6 der Tragstruktur 2. Der stromaufwärtsseitige Endabschnitt 4 weist eine stufenförmige Verjüngung auf.

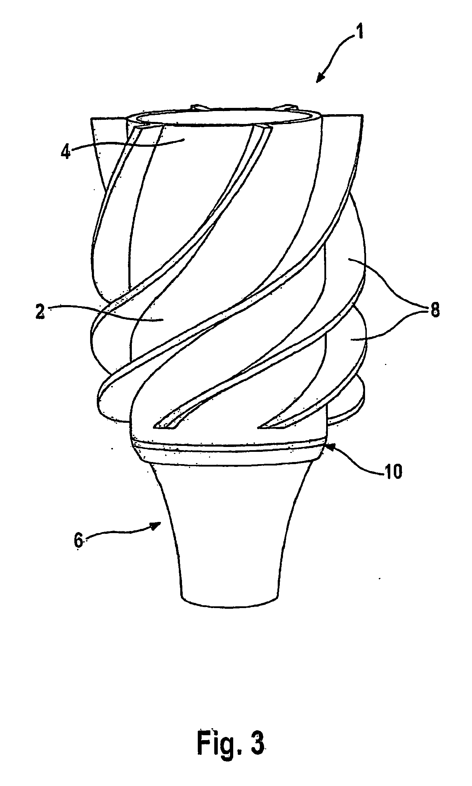

Eine dritte beispielhafte Ausführungsform des Drallelements 1 ist in Fig. 3 dargestellt. Hinsichtlich der Merkmale, die bei der ersten Ausführungsform gemäß Fig. 1 und der dritten Ausführungsform gemäß Fig. 3 identisch sind, wird auf die Beschreibung der Fig. 1 verwiesen.

Die dritte Ausführungsform des Drallelements 1 gemäß Fig. 3 weist am stromabwärtsseitigen Endabschnitt 6 der Tragstruktur 2 einen Durchmesser auf, der gegenüber dem Durchmesser des stromaufwärtsseitigen Endabschnitts 4 der Tragstruktur 2 verkleinert ist. Der Durchmesser der Tragstruktur 2 verkleinert sich am Endabschnitt 4 in Strömungsrichtung nicht linear, sondern kurvenförmig, wobei die Durchmesserminderung stetig ist. Dadurch bildet sich am Übergang vom zylindrischen Abschnitt der Tragstruktur 2 zum sich in Strömungsrichtung zunehmend verjüngenden Endabschnitt 4 ein Kante 10 aus. Diese Kante 10 bewirkt bei hinreichender tangentialer Beschleunigung der strömenden Flüssigkeit eine erleichterte Ablösung derselben von der äußeren Umfangsfläche der Tragstruktur 2.

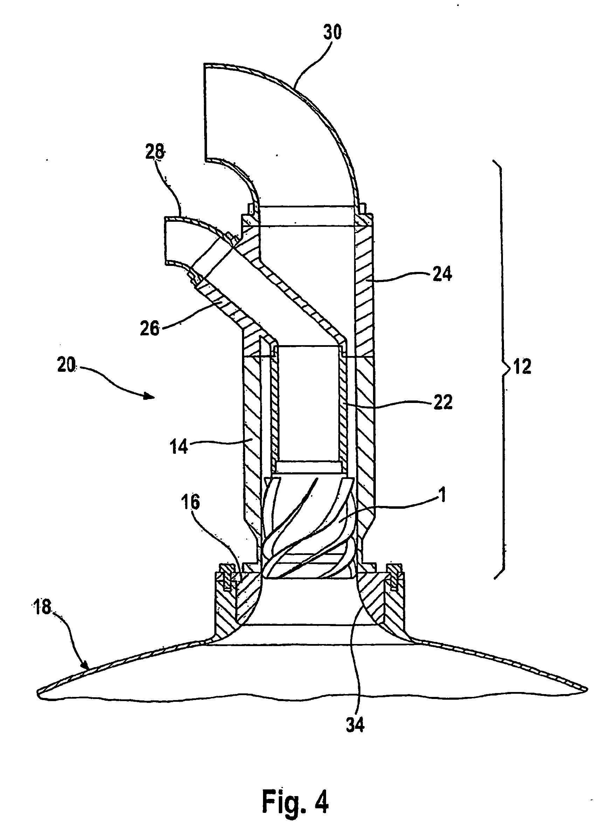

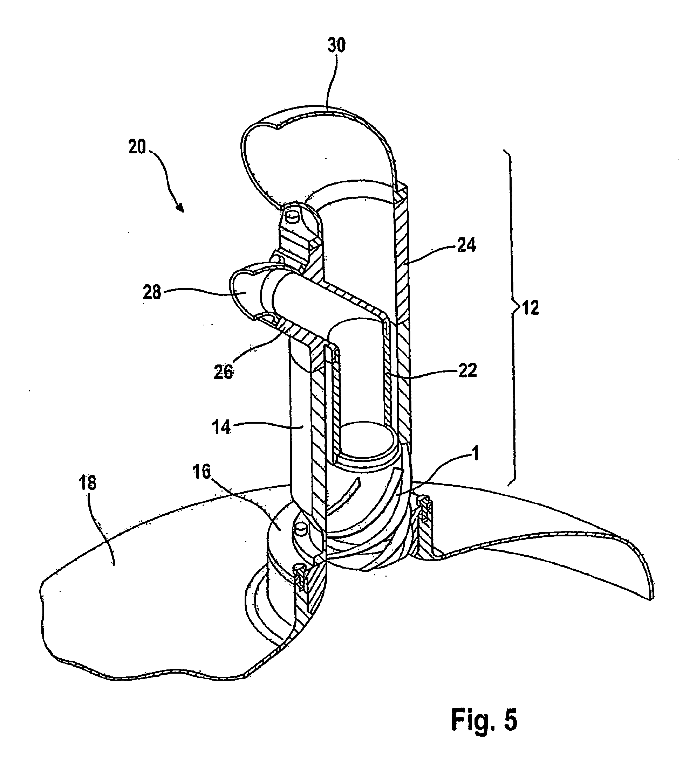

Gemäß der Darstellung in den Figuren 4 und 5 weist ein Einlaufventil 12 das Drallelement 1, ein Ventilgehäuse 14, einen Flansch 16 zum Anschließen an den Entgasungsbehälter 18 einer Entgasungsvorrichtung 20, ein Innenelement 22, eine Flüssigkeitszuführeinrichtung 24 und einen Vakuumanschluss 26 auf. Hinsichtlich des Drallelements 1 in dieser Ausführungsform wird auf die Beschreibung der Fig. 2 verwiesen.

Das Ventilgehäuse 14 weist im Wesentlichen die Gestalt eines zylindrischen Hohlkörpers auf. In seinem stromaufwärtsseitigen Endabschnitt weist es die Flüssigkeitszuführeinrichtung 24 und den Vakuumanschluss 26 auf. An seinem strömungsabwärtsseitigen Endabschnitt ist das Ventilgehäuse 14 mit dem Flansch 16 verbunden. Der Flansch 16 ist in den Entgasungsbehälter 18 der Entgasungsvorrichtung 20 eingebaut. Von der Entgasungsvorrichtung 20 ist in den Fig. 4 und 5 das Einlaufventil 12 und der Entgasungsbehälter 18 dargestellt. Als weitere Komponenten der Entgasungsvorrichtung 20, wie beispielsweise Pumpen oder Steuereinrichtungen, können handelsübliche, aus dem Stand der Technik bekannte Komponenten eingesetzt werden.

Das Drallelement 1 ist im Innern des Ventilgehäuses 14 angeordnet. Genauer ist das Drallelement 1 am stromabwärtsseitigen Endabschnitt des Ventilgehäuses 14 coaxial zu dessen Zentralachse angeordnet. Der Durchmesser der Tragstruktur 2 ist kleiner als der Innendurchmesser des Ventilgehäuses 14, wodurch sich ein im Wesentlichen zylindrischer Hohlraum zwischen der Tragstruktur 2 und dem Ventilgehäuse 14 ausbildet, der die Strömungsleitelemente 8 aufnimmt. Auf den stromaufwärtsseitigen Endabschnitt 4 des Drallelements 1 ist das Innenelement 22 aufgesetzt, das im Wesentlichen dieselbe Gestalt wie die Tragstruktur 2 mit einem im Wesentlichen gleichen Durchmesser aufweist. Dadurch wird zwischen dem Innenelement 22 und dem Ventilgehäuse 14 ein ebenfalls im Wesentlichen zylindrischer Hohlraum ausgebildet. Der Übergang vom Innenelement 22 zum Drallelement 1 ist sowohl auf der Innenseite als auch auf der äußeren Umfangsfläche stetig.

An seinem stromaufwärtsseitigen Endabschnitt ist das Innenelement 22 mit dem Vakuumanschluss 26 bündig verbunden. Der Vakuumanschluss 26 ist ein rohrförmiger Anschlussstutzen, der eine Vakuumleitung 28 mit dem Inneren des Innenelements 22 verbindet und durch die Wand der Flüssigkeitszuführeinrichtung 24 geführt ist. Über die Hohlräume im Inneren des Drallelements 1, des Innenelements 22 und des Vakuumanschlusses 26 ist der Innenraum des Entgasungsbehälters 18 unmittelbar mit der Vakuumleitung 28 verbunden. An die Flüssigkeitszuführeinrichtung 24 ist eine Flüssigkeitsleitung 30 zur Herführung der zu entgasenden Flüssigkeit angeschlossen.

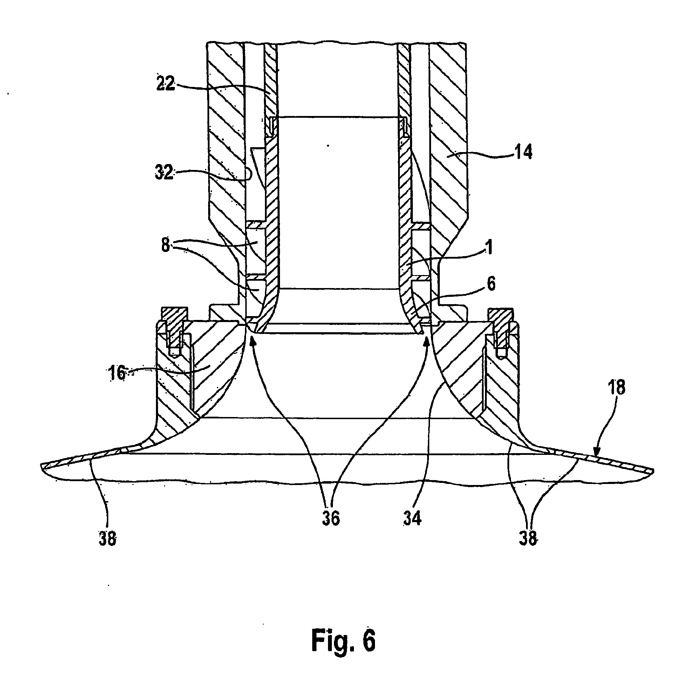

Wie insbesondere aus der detaillierten Darstellung der Fig. 6 ersichtlich, entspricht der Durchmesser des Drallelements 1 mit den auf seiner äußeren Umfangsfläche angeordneten Strömungsleitelementen 8 im Wesentlichen dem Innendurchmesser des Ventilgehäuses 14. Die Außenkanten der Strömungsleitelemente 8 liegen bündig an einer Innenfläche 32 des Ventilgehäuses 14 an. Zwischen dem stromabwärtsseitigen Endabschnitt 6 des Drallelements 1 und dem Übergang von der Innenfläche 32 des Ventilgehäuses 14 zu einer Innenfläche 34 des Flanschs 16 ist eine Öffnung 36 in Gestalt eines Ringspalts ausgebildet. Dabei geht die Innenfläche 32 des Ventilgehäuses 14 stetig auf die Innenfläche 34 des Flanschs 16 über. Die Innenfläche 34 des Flanschs 16 wiederum geht stetig auf eine sich bündig anschließende Innenfläche 38 des Entgasungsbehälters 18 über. Die Innenfläche 34 des Flanschs 16 weist im Wesentlichen die Gestalt eines Kegelstumpfes mit kurvenförmiger Flankengestalt auf. Insgesamt verändert sich die Ausrichtung einer Tangente an der Innenfläche 32 des Ventilgehäuses 14 über eine am Flansch 16 zu einer am Entgasungsbehälter 18 von einer im Wesentlichen vertikalen Ausrichtung zu einer im Wesentlichen horizontalen Ausrichtung mit einem durchgehend stetigen Übergang.

Die Entgasungsvorrichtung 20 weist ein erfindungsgemäßes Einlaufventil 12, wenigstens jedoch ein erfindungsgemäßes Drallelement 1 sowie einen Entgasungsbehälter 18 auf. Alle weiteren Aggregate, wie beispielweise Pumpen oder Steuereinrichtungen, sind die einer bekannten Entgasungsvorrichtung und werden daher nicht näher beschrieben.

Der erfindungsgemäße Entgasungsbehälter 18 weist einen Durchmesser von 0,5 bis 1,8 m, insbesondere von 0,8 bis 1,2 m auf. Die Höhe des Entgasungsbehälters 18 beträgt zwischen 0,8 und 1,8 m, insbesondere zwischen 1,2 bis 1,5 m.

Während des Entgasungsvorgangs beträgt die Spaltbreite zwischen dem Drallelement 1 und dem Ventilgehäuses 14 zwischen 0 bis 40 mm. Besonders vorteilhaft ist eine Spaltbreite zwischen 10 bis 20 mm. Insbesondere ist eine Spaltbreiteneinstellung von etwa 15 mm zu bevorzugen.

Zur Entgasung einer Flüssigkeit in der Entgasungsvorrichtung 20 wird die Flüssigkeit über das Einlaufventil 12 in den Entgasungsbehälter 18 eingebracht. Dabei strömt die Flüssigkeit über die Flüssigkeitsleitung 30 in das Innere der Flüssigkeitszuführeinrichtung 24 ein. Die Flüssigkeit strömt vertikal abwärts durch den Hohlraum, der zwischen dem Innenelement 22 und dem Ventilgehäuse 14 ausgebildet wird und weiter zum Hohlraum, der zwischen der Tragstruktur 2 und dem Ventilgehäuse 14 ausbildet ist und tritt in Kontakt mit der äußeren Umfangsfläche der Tragstruktur 2 und den Umfangsflächen der Strömungsleitelemente 8. Beim Durchströmen dieses Hohlraums wird die Flüssigkeit auf die vorstehend beschriebene Weise umgelenkt bzw. beschleunigt, wobei ihr auch ein Drehimpuls entsprechend der Führung der Strömungsleitelemente 8 aufgeprägt wird. Die tangential beschleunigte Flüssigkeit tritt durch die Öffnung 36 in Gestalt eines schirmartigen Flüssigkeitsfilms aus und legt sich an die Innenfläche 34 des Flanschs 16 an. Daran und an der sich anschließenden Innenfläche 38 des Entgasungsbehälters 18 fließt die Flüssigkeit als ein geschlossener Flüssigkeitsfilm ab. Der Flüssigkeitsfilm strömt von der Decke des Entgasungsbehälters 18 über die im Wesentlichen senkrecht ausgerichteten seitlichen Innenwänden zu dessen Boden, von wo die gesammelte, entgaste Flüssigkeit abgezogen wird. Somit ist während des Entgasungsvorgangs praktisch die gesamte Innenfläche des Entgasungsbehälters 18 mit dem Film der zu entgasenden Flüssigkeit belegt, der beim Abfließen durchgehend an der Wand anliegt.

Die Eigenschaften des vom Einlaufventil 12 ausgebildeten Flüssigkeitsfilms sind für die Qualität der Entgasung von wesentlicher Bedeutung. So bestimmt insbesondere die Dicke des Flüssigkeitsfilms, ob alle Volumenelemente der Flüssigkeit den an der Oberfläche der Flüssigkeit herrschenden Entgasungsbedingungen ausgesetzt werden oder nicht. Dies beeinflusst wiederum die Vollständigkeit der Entgasung der Flüssigkeit. Vorteilhafterweise beträgt die Dicke des Flüssigkeitsfilms bis etwa 5 mm, vorzugsweise bis 3 mm, insbesondere bis 1,5 mm.

Typischerweise betragen die Volumenströme durch das erfindungsgemäße Einlaufventil 5 bis 90 m³/h, vorzugsweise 5 bis 60 m³/h und insbesondere 5 bis 45 m³/h. Der Vordruck der einströmenden Flüssigkeit ist in einem Bereich von 0 bis 3 bar, vorzugsweise 0,5 bis 2,5 bar, insbesondere etwa 1,5 bar. Die Temperatur der zu entgasenden Flüssigkeit beträgt üblicherweise 35 bis 75 °C. Insbesondere beträgt die Flüssigkeitstemperatur etwa 3 °C unter der Siedelinie der Flüssigkeit. Der Absolutdruck im Innern des Entgasungsbehälters beträgt kleiner 800 mbar, vorzugsweise kleiner 200 mbar, insbesondere kleiner 100 mbar. Der Innendurchmesser des Ventilgehäuses 14 des Einlaufventils 12 beträgt bis zu 400 mm, vorzugsweise bis zu 250 mm, insbesondere bis zu 150 mm. Die Länge des Ventilgehäuses 14 beträgt zwischen dem ein- und zehnfachen seines Innendurchmessers, vorzugsweise das zwei- bis fünffache. Das Drallelement 1 weist einen Durchmesser auf, der zwischen dem 0,8-fachen bis 1,1-fachen, insbesondere zwischen dem 0,9-fachen bis 1,0-fachen des Innendurchmessers des Ventilgehäuses 14 beträgt. Das Einlaufventil 12 kann zum Entgasen von Flüssigkeiten, vorzugsweise von solchen mit einer wasserähnlichen Viskosität, verwendet werden.

In der erfindungsgemäßen Entgasungsvorrichtung 20 können Flüssigkeiten und insbesondere flüssige Lebensmittel oder entsprechende Vorstufen entgast werden. Insbesondere ist die Vorrichtung 20 zum Entgasen von Flüssigkeiten wie Wasser, Bier, Gemüsesaft, Fruchtsaft, Limonade, Nektar, Honig, Milch, Sirup, Flüssigkeiten auf Teebasis, Grundstoffe, Konzentrate und beliebige Mischungen dieser Flüssigkeiten, oder dergleichen vorgesehen. Dabei können die vorstehend genannten Flüssigkeiten auch Feststoffe, wie beispielsweise Pulpen, Fruchtmark, Fasern mit vorzugsweise 5 bis 15 mm Länge, Fruchtstücke, beispielsweise in Würfel- oder Raspelgestalt, Ballaststoffe, Eiweiß oder dergleichen enthalten.

Die Erfindung lässt neben den erläuterten Ausführungsbeispielen weitere Gestaltungsansätze zu.

Der stromaufwärtsseitige Endabschnitt 4 der Tragstruktur 2 kann an Stelle einer stufenförmige Verjüngung auch eine beliebige andere Gestalt aufweisen.

Der stromabwärtsseitige Endabschnitt 6 der Tragstruktur 2 kann zusätzlich eine Hinterschneidung zur Ausbildung einer Strömungsabrisskante aufweisen.

Die Strömungsleitelemente 8 des Drallelements 1 müssen nicht auf der äußeren Umfangsfläche der Tragstruktur 2 angeordnet sein. Denkbar ist auch, dass sie im Hohlraum der Tragstruktur 2, insbesondere auf einer Zylinderinnenfläche der Tragstruktur 2, angeordnet sind.

Die Anzahl der Strömungsleitelemente 8 ist nicht auf 6 beschränkt. Das Drallelement 1 kann wenigstens 1, vorzugsweise 2 bis 18, insbesondere 4 bis 8 Strömungsleitelemente 8 aufweisen.

Ferner können die Strömungsleitelemente 8 eine von der Streifenform abweichende Gestalt aufweisen. So können sie beispielweise als schmale Streifenabschnitte ausgebildet sein. Diese können auch versetzt zueinander angeordnet sein. Zudem müssen sie nicht über ihre gesamte Längsseite mit der Zylinderfläche der Tragstruktur 2 verbunden sein. Es ist auch eine abschnittsweise oder punktuelle Befestigung an der Tragstruktur 2 denkbar.

Darüber hinaus kann auch der Winkel zwischen den Strömungsleitelementen 8 und der äußeren Umfangsfläche der Tragstruktur 2 vom rechten Winkel beliebig abweichen.

Die Führung der Strömungsleitelemente 8 kann in Strömungsrichtung der Flüssigkeit gesehen auch gegen den Uhrzeigersinn ausgerichtet sein.

Die Strömungsleitelemente 8 müssen nicht vom stromaufwärtsseitigen Endabschnitt 4 der Tragstruktur 2 bis zu deren stromabwärtsseitigen Endabschnitt 6 reichen. Es ist möglich, dass sich wenigstens ein Teil der Strömungsleitelemente 8 nur über einen Teil der Länge des Schafts 2 erstreckt.

Ferner können die Strömungsleitelemente 8 auch mehr oder weniger als einen Bereich von etwa des halben Umfangs der Tragstruktur 2 (ca. 180 °) umfassen. Alternativ kann dieser Bereich von etwa 15 ° bis zu mehreren Umdrehungen um den Schaft reichen.

Die Steigung wenigstens eines der Strömungsleitelemente 8 kann in der Nähe des stromaufwärtsseitigen Endabschnitts 4 auch kleiner als in der Nähe des stromabwärtsseitigen Endabschnitts 6 sein.

Sowohl die Tragstruktur 2 des Drallelements 1 als auch das Innenelement 22 müssen nicht notwendigerweise als Hohlzylinder ausgeführt sein. Wenigstens eines davon kann auch als Vollzylinder oder in einer ähnlichen Gestalt ausgeführt sein. Zudem kann wenigstens eines davon auch eine gitterförmige Gestalt und/oder Aussparungen aufweisen. Ferner kann die Tragstruktur 2 und/oder das Innenelement 22 auch einen Querschnitt aufweisen, der eine mehreckige oder im Wesentlichen elliptische Gestalt aufweist.

Das Drallelement 1 kann mit dem Innenelement 22 auch einstückig verbunden sein. Alternativ können beide als ein einziges Bauteil ausgebildet sein. Ferner ist auch denkbar, dass das erfindungsgemäße Einlaufventil kein Innenelement 22 aufweist.

Der Anschluss des Entgasungsbehälters 18 an das Vakuum muss nicht notwendigerweise über das Einlaufventil 12 erfolgen. Er kann auch auf eine beliebige andere Weise außerhalb des Einlaufventils 12 erfolgen. In diesem Fall kann der Vakuumanschluss 26 im Einlaufventil 12 entfallen.

Das Einlaufventil 12 muss nicht mittels des Flanschs 16 am Entgasungsbehälter 18 befestigt sein. Denkbar ist auch, das Einlaufventil 12 ohne den Flansch 16 unmittelbar am Entgasungsbehälter 18 zu befestigen.

Die Außenkanten der Strömungsleitelemente 8 müssen nicht bündig an der Innenfläche 32 des Ventilgehäuses 14 anliegen, sondern können auch beabstandet davon sein, so dass zwischen den Strömungsleitelementen 8 und der Innenfläche 32 des Ventilgehäuses 14 wenigstens ein Spalt ausgebildet wird.

Die Gestalt der Innenfläche 34 des Flanschs 16 kann alternativ auch eine andere als die Gestalt eines Kegelstumpfes mit kurvenförmiger Flankengestalt aufweisen. Möglich ist beispielsweise die Gestalt eines Kegelstumpfes mit linearer Flankengestalt.

Die Flüssigkeitszuführung über die Flüssigkeitszuführeinrichtung 24 ist nicht auf eine vertikale Zuführrichtung beschränkt. Sie kann auch eine beliebige andere Richtung aufweisen.

Nach dem Austritt der Flüssigkeit aus der Öffnung 36 kann der ausgebildete Flüssigkeitsschirm auch auf einen vorbestimmten Bereich der Innenfläche 38 des Entgasungsbehälters 18 auftreffen.

Das vorstehend beschriebene Drallelement, bzw. das damit ausgestattete Einlaufventil ist im Zusammenspiel mit einem Behälter auch als Gefäß für eine wesentlich verbesserte Expansionsverdampfung/-kühlung verwendbar. Durch das mit dem Drallelement ausgestattete Einlaufventil kann eine Expansionsverdampfung beim Einlaufen der Flüssigkeit verbessert werden. Dabei können die vorstehend im Zusammenhang mit der Entgasung als vorteilhaft diskutierten Effekte in ähnlich vorteilhafter Weise für eine Expansionskühlung einer heißen Flüssigkeit beim Einlaufen in den Behälter für eine verbesserte Kühlung ausgenutzt werden.

## Patentansprüche

1. Verwendung eines Drallelements (1) für ein Einlaufventil (12) einer Entgasungsvorrichtung (20) zum Einbringen eines flüssigen Lebensmittels oder entsprechender Vorstufen desselben in die Entgasungsvorrichtung (20),
wobei das Drallelement (1) wenigstens ein Strömungsleitelement (8) aufweist, mittels dem der durch das Einlaufventil (12) strömenden flüssigen Lebensmittel oder entsprechenden Vorstufen desselben ein Drehimpuls aufprägbar ist;
wobei das Drallelement (1) eine Tragstruktur (2) aufweist;
wobei das wenigstens eine Strömungsleitelement (8) auf einer äußeren Umfangsfläche und/oder auf einer Innenfläche der Tragstruktur (2) angeordnet ist; und
wobei die Steigung des Strömungsleitelements (8) über den strömungsberührten Abschnitt stromabwärts abnimmt.

2. Verwendung nach Anspruch 1 **dadurch gekennzeichnet, dass** das wenigstens eine Strömungsleitelement (8) einen Bereich von etwa 15 ° bis zu mehreren Umdrehungen um die Tragstruktur (2), insbesondere einen Bereich von etwa des halben Umfangs der Tragstruktur (2), umfaßt.

3. Verwendung eines Einlaufventils (12) zum Einbringen eines flüssigen Lebensmittels oder entsprechender Vorstufen desselben in die Entgasungsvorrichtung (20), wobei das Einlaufventil (12) ein Ventilgehäuse (14) und das Drallelement (1) nach Anspruch 1 oder 2 aufweist wobei zwischen der Tragstruktur (2) und einer Innenfläche (32) des Ventilgehäuses (14) wenigstens eine Öffnung (36) ausgebildet ist, durch welche das flüssige Lebensmittel oder entsprechende Vorstufen desselben in einen Entgasungsbehälter (18) der Entgasungsvorrichtung (20) einbringbar ist, und wobei die wenigstens eine Öffnung (36) im Wesentlichen die Gestalt eines Kreisringsegments aufweist.

4. Verwendung nach Anspruch 3, **dadurch gekennzeichnet, dass** eine Spaltbreite zwischen dem Drallelement (1) und dem Ventilgehäuse (14) zwischen 0 und 40 mm, vorzugsweise zwischen 10 und 20 mm, insbesondere 15 mm, beträgt.

5. Verwendung nach Anspruch 3 oder 4, **dadurch gekennzeichnet, dass** das Einlaufventil (12) ferner eine, insbesondere an einem Flansch (16) zum Anschließen an den Entgasungsbehälter (18) der Entgasungsvorrichtung (20) ausgebildete, Innenfläche (34) aufweist, an der ein Flüssigkeitsfilm ausbildbar ist, wobei die Innenfläche (34) im Wesentlichen die Gestalt eines Kegelstumpfes mit kurvenförmiger oder linearer Flankengestalt aufweist.

6. Verwendung nach wenigstens einem der Ansprüche 3 bis 5, **dadurch gekennzeichnet, dass** das Einlaufventil (12) ferner ein Innenelement (22) aufweist, wobei das Innenelement (22) coaxial zum Drallelement (1) angeordnet und mit diesem verbunden ist.

7. Verwendung nach wenigstens einem der Ansprüche 3 bis 6, **dadurch gekennzeichnet, dass** das durch das Einlaufventil (12) strömende flüssige Lebensmittel oder entsprechende Vorstufen desselben an einer äußeren Umfangsfläche des Drallelements (1) umlenkbar ist.

8. Verwendung nach wenigstens einem der Ansprüche 3 bis 7, **dadurch gekennzeichnet, dass** der Flüssigkeitsfilm auf einen vorbestimmten Bereich der Innenfläche (34) auftrifft.

9. Verwendung nach wenigstens einem der Ansprüche 3 bis 8, **dadurch gekennzeichnet, dass** der Flüssigkeitsfilm auf einen vorbestimmten Bereich der Innenfläche (38) des Entgasungsbehälters (18) auftrifft.

10. Verwendung nach wenigstens einem der Ansprüche 3 bis 9, **dadurch gekennzeichnet, dass** die Größe der Öffnung (36) in Abhängigkeit vom Volumenstrom des durch das Einlaufventil (12) strömenden flüssigen Lebensmittels oder entsprechender Vorstufen desselben steuerbar ist.

11. Verwendung nach wenigstens einem der Ansprüche 3 bis 10, **dadurch gekennzeichnet, dass** die Größe der Öffnung(36) in Abhängigkeit von der Zusammensetzung des durch das Einlaufventil (12) strömenden flüssigen Lebensmittels oder entsprechender Vorstufen desselben steuerbar ist.

12. Verwendung einer Vorrichtung (20) zum Entgasen flüssiger Lebensmittel oder entsprechender Vorstufen desselben, **dadurch gekennzeichnet, dass** die Entgasungsvorrichtung (20) ein Drallelement (1) nach Anspruch 1 oder 2 und/oder ein Einlaufventil (12) nach wenigstens einem der Ansprüche 3 bis 11 aufweist.

13. Verfahren zum Entgasen von Flüssigkeiten,
wobei eine Flüssigkeit in eine Entgasungsvorrichtung (20) mittels eines Einlaufventils (12) eingebracht wird;
wobei das Einlaufventil (12) ein Ventilgehäuse (14) und ein Drallelement (1) aufweist;
wobei das Drallelement (1) wenigstens ein Strömungsleitelement (8) aufweist, mittels dessen der durch das Einlaufventil (12) strömenden Flüssigkeit ein Drehimpuls aufprägbar ist;
wobei das Drallelement (1) eine Tragstruktur (2) aufweist;
wobei das wenigstens eine Strömungsleitelement (8) auf einer äußeren Umfangsfläche und/oder auf einer Innenfläche der Tragstruktur (2) angeordnet ist; wobei die Steigung des Strömungsleitelements (8) über den strömungsberührten Abschnitt stromabwärts abnimmt;
wobei durch das wenigstens eine Strömungsleitelement (8) der eingebrachten Flüssigkeit ein Drehimpuls aufgeprägt wird; und
wobei der Vordruck der einströmenden Flüssigkeit in einem Bereich von 0,5 bis 2,5 bar, insbesondere etwa 1,5 bar, ist.

14. Verfahren zum Entgasen von Flüssigkeiten nach Anspruch 13, wobei die Flüssigkeit beim Durchströmen durch wenigstens eine Öffnung (36) einen Flüssigkeitsfilm ausbildet, wobei die Öffnung (36) zwischen der Tragstruktur (2) und einer Innenfläche (32) des Ventilgehäuses (14) ausgebildet ist.

15. Verfahren zum Entgasen von Flüssigkeiten nach Anspruch 13 oder 14, wobei der Flüssigkeitsfilm schirmartig ausgebildet wird.

16. Verfahren zum Entgasen von Flüssigkeiten nach wenigstens einem der Ansprüche 13 bis 15, wobei der Flüssigkeitsfilm auf einen vorbestimmten Bereich der Innenfläche (34) des Einlaufventils (12) auftrifft.

17. Verfahren zum Entgasen von Flüssigkeiten nach wenigstens einem der Ansprüche 13 bis 16, wobei der Flüssigkeitsfilm auf einen vorbestimmten Bereich der Innenfläche (38) des Entgasungsbehälters (18) auftrifft.

18. Verfahren zum Entgasen von Flüssigkeiten nach wenigstens einem der Ansprüche 13 bis 17, wobei die Temperatur der zu entgasenden Flüssigkeit in einem Bereich von 35 bis 75 °C, vorzugsweise etwa 3 °C unter deren Siedelinie, liegt.

## Claims

1. Use of a spin-imparting member (1) for a feed valve (12) of a degassing device (20) for introducing a liquid food or corresponding pre-stages thereof into the degassing device (20),
wherein the spin-imparting member (1) includes at least one flow guide member (8) whereby an angular momentum may be impressed on the liquid food or corresponding pre-stages thereof flowing through the feed valve (12);
wherein the spin-imparting member (1) includes a support structure (2);
wherein the at least one flow guide member (8) is disposed on an outer peripheral surface and/or on an inner surface of the support structure (2); and
wherein the pitch of the flow guide member (8) decreases in a downstream direction across the portion that is in contact with the flow.

2. Use according to claim 1, **characterized in that** the at least one flow guide member (8) reaches from about 15° up to several rotations about the support structure (2), in particular a range of about half the diameter of the support structure (2).

3. Use of a feed valve (12) for introducing a liquid food or corresponding pre-stages thereof into the degassing device (20), wherein the feed valve (12) includes a valve housing (14) and the spin-imparting member (1) according claim 1 or 2;
wherein at least one opening (36) is formed between the support structure (2) and an inner surface (32) of the valve housing (14), through which the liquid food or corresponding pre-stages thereof may be introduced into a degassing container (18) of the degassing device (20);
and wherein the at least one opening (36) substantially has the shape of a circular ring segment.

4. Use according to claim 3, **characterized in that** the gap width between the spin-imparting member (1) and the valve housing (14) is between 0 to 40 mm; preferably between 10 to 20 mm, in particular 15 mm.

5. Use according to claim 3 or 4, **characterized in that** the feed valve (12) further includes an inner surface (34), in particular one formed on a flange (16) for connection to the degassing container (18) of the degassing device (20), on which a liquid film may be formed;
wherein the inner surface (34) substantially has the shape of a truncated cone with a curve-shaped or linear flank shape.

6. Use according to at least one of claims 3 to 5, **characterized in that** the feed valve (12) further includes an internal member (22), with said internal member (22) being disposed coaxially with the spin-imparting member (1) and connected to the latter.

7. Use according to at least one of claims 3 to 6, **characterized in that** the liquid food or corresponding pre-stages thereof flowing through the feed valve (12) may be deflected at an outer peripheral surface of the spin-imparting member (1).

8. Use according to at least one of claims 3 to 7, **characterized in that** the liquid film impacts on a predetermined area of the inner surface (34).

9. Use according to at least one of claims 3 to 8, **characterized in that** the liquid film impacts on a predetermined area of the inner surface (38) of the degassing container (18).

10. Use according to at least one of claims 3 to 9, **characterized in that** the size of the opening (36) is controllable in accordance with the volume flow of the liquid food or corresponding pre-stages thereof flowing through the feed valve (12).

11. Use according to at least one of claims 3 to 10, **characterized in that** the size of the opening (36) is controllable in accordance with the composition of the liquid food or corresponding pre-stages thereof flowing through the feed valve (12).

12. Use of a device (20) for degassing liquid food or corresponding pre-stages thereof, **characterized in that** the degassing device (20) includes a spin-imparting member (1) according to claim 1 or 2 and/or a feed valve (12) according to at least one of claims 3 to 11.

13. A method for degassing liquids,
wherein a liquid is introduced into a degassing device (20) by means of a feed valve (12);
wherein the feed valve (12) includes a valve housing (14) and a spin-imparting member (1);
wherein the spin-imparting member (1) has at least one flow guide member (8), whereby an angular momentum may be impressed on the liquid flowing through the feed valve (12);
wherein the spin-imparting member (1) includes a support structure (2);
wherein the at least one flow guide member (8) is disposed on an outer peripheral surface and/or on an inner surface of the support structure (2);
wherein the pitch of the flow guide member (8) decreases in a downstream direction across the portion that is in contact with the flow;
wherein an angular momentum is impressed on the liquid being introduced by the at least one flow guide member (8); and
wherein the admission pressure of the inflowing liquid is in a range from 0.5 to 2.5 bars, in particular about 1.5 bars.

14. The method for degassing liquids according to claim 13, wherein the liquid forms a liquid film while flowing through at least one opening (36), wherein the opening (36) is formed between the support structure (2) and an inner surface (32) of the valve housing (14).

15. The method for degassing liquids according to claim 13 or 14, wherein the liquid film is given an umbrella-type configuration.

16. The method for degassing liquids according to at least one of claims 13 to 15, wherein the liquid film impacts on a predetermined area of the inner surface (34) of the feed valve (12).

17. The method for degassing liquids according to at least one of claims 13 to 16, wherein the liquid film impacts on a predetermined area of the inner surface (38) of the degassing container (18).

18. The method for degassing liquids according to at least one of claims 13 to 17, wherein the temperature of the liquid to be degassed is in a range from 35 to 75 °C, preferably about 3 °C below the boiling point curve thereof.

## Revendications

1. Utilisation d'un élément en hélice (1) pour une vanne d'admission (12) d'un dispositif de dégazage (20), pour l'introduction d'un produit alimentaire liquide ou de précurseurs correspondants de celui-ci dans le dispositif de dégazage (20),
où l'élément en hélice (1) comporte au moins un élément directeur de flux (8), au moyen duquel un moment cinétique peut être imprimé au produit alimentaire liquide ou aux précurseurs correspondants de celui-ci s'écoulant au travers de la vanne d'admission (12) ;
où l'élément en hélice (1) comporte une structure support (2) ;
où le ou les éléments directeurs de flux (8) sont disposés sur une surface périphérique extérieure et/ou sur une surface intérieure de la structure support (2) ; et
où le pas de l'élément directeur de flux (8) décroît en aval sur la partie en contact avec le flux.

2. Utilisation selon la revendication 1, **caractérisée en ce que** le ou les éléments directeurs de flux (8) couvrent une étendue allant de 15° environ à plusieurs tours autour de la structure support (2), en particulier une étendue représentant sensiblement la demi-circonférence de la structure support (2).

3. Utilisation d'une vanne d'admission (12) pour l'introduction d'un produit alimentaire liquide ou de précurseurs correspondants de celui-ci dans le dispositif de dégazage (20), la vanne d'admission (12) comportant un carter de vanne (14) et l'élément en hélice (1) selon la revendication 1 ou la revendication 2,
où au moins une ouverture (36) est prévue entre la structure support (2) et une surface intérieure (32) du carter de vanne (14), par laquelle le produit alimentaire liquide ou des précurseurs correspondants de celui-ci peuvent être introduits dans un récipient de dégazage (18) du dispositif de dégazage (20), et
où l'ouverture ou les ouvertures (36) ont sensiblement la forme d'un segment de couronne.

4. Utilisation selon la revendication 3, **caractérisée en ce qu'**une largeur de fente entre l'élément en hélice (1) et le carter de vanne (14) est comprise entre 0 et 40 mm, de préférence entre 10 et 20 mm, et tout particulièrement égale à 15 mm.

5. Utilisation selon la revendication 3 ou la revendication 4, **caractérisée en ce que** la vanne d'admission (12) comporte en outre une surface intérieure (34) réalisée en particulier sur une bride (16) de raccord au récipient de dégazage (18) du dispositif de dégazage (20), sur laquelle un film liquide peut être formé, ladite surface intérieure (34) ayant sensiblement la forme d'un cône tronqué avec un flanc en courbe ou linéaire.

6. Utilisation selon au moins une des revendications 3 à 5, **caractérisée en ce que** la vanne d'admission (12) comporte en outre un élément intérieur (22), ledit élément intérieur (22) étant disposé coaxialement à l'élément en hélice (1) et étant raccordé à celui-ci.

7. Utilisation selon au moins une des revendications 3 à 6, **caractérisée en ce que** le produit alimentaire liquide ou des précurseurs correspondants de celui-ci s'écoulant au travers de la vanne d'admission (12) peuvent être déviés sur une surface périphérique extérieure de l'élément en hélice (1).

8. Utilisation selon au moins une des revendications 3 à 7, **caractérisée en ce que** le film liquide sort sur une zone définie de la surface intérieur (34).

9. Utilisation selon au moins une des revendications 3 à 8, **caractérisée en ce que** le film liquide sort sur une zone définie de la surface intérieure (38) du récipient de dégazage (18).

10. Utilisation selon au moins une des revendications 3 à 9, **caractérisée en ce que** la grandeur de l'ouverture (36) peut être commandée en fonction du débit volumique du produit alimentaire liquide ou des précurseurs correspondants de celui-ci s'écoulant au travers de la vanne d'admission (12).

11. Utilisation selon au moins une des revendications 3 à 10, **caractérisée en ce que** la grandeur de l'ouverture (36) peut être commandée en fonction de la composition du produit alimentaire liquide ou des précurseurs correspondants de celui-ci s'écoulant au travers de la vanne d'admission (12).

12. Utilisation d'un dispositif (20) destiné au dégazage de produits alimentaires liquides ou de précurseurs correspondants de ceux-ci, **caractérisée en ce que** ledit dispositif de dégazage (20) comporte un élément en hélice (1) selon la revendication 1 ou 2 et/ou une vanne d'admission (12) selon au moins une des revendications 3 à 11.

13. Procédé de dégazage de liquides,
où un liquide est introduit dans un dispositif de dégazage (20) par une vanne d'admission (12) ;
où la vanne d'admission (12) comporte un carter de vanne (14) et un élément en hélice (1) ;
où l'élément en hélice (1) comporte au moins un élément directeur de flux (8), au moyen duquel un moment cinétique peut être imprimé au liquide s'écoulant au travers de la vanne d'admission (12) ;
où l'élément en hélice (1) comporte une structure support (2) ;
où le ou les éléments directeurs de flux (8) sont disposés sur une surface périphérique extérieure et/ou sur une surface intérieure de la structure support (2) ;
où le pas de l'élément directeur de flux (8) décroît en aval sur la partie en contact avec le flux ;
où un moment cinétique est imprimé par le ou les éléments directeurs de flux (8) au liquide introduit ; et
où la pression d'admission du liquide s'écoulant est comprise entre 0,5 et 2,5 bar, et est en particulier sensiblement égale à 1,5 bar.

14. Procédé de dégazage de liquides selon la revendication 13, où le liquide forme un film liquide en s'écoulant au travers d'au moins une ouverture (36), ladite ou lesdites ouvertures (36) étant formées entre la structure support (2) et une surface intérieure (32) du carter de vanne (14).

15. Procédé de dégazage de liquides selon la revendication 13 ou la revendication 14, où le film liquide est réalisé en forme d'écran.

16. Procédé de dégazage de liquides selon au moins une des revendications 13 à 15, où le film liquide sort sur une zone définie de la surface intérieure (34) de la vanne d'admission (12).

17. Procédé de dégazage de liquides selon au moins une des revendications 13 à 16, où le film liquide sort sur une zone définie de la surface intérieure (38) du récipient de dégazage (18).

18. Procédé de dégazage de liquides selon au moins une des revendications 13 à 17, où la température du liquide à dégazer est comprise entre 35 et 75 °C, et est de préférence inférieure d'environ 3 °C à sa courbe d'ébullition.
